# EUROPÄISCHE PATENTANMELDUNG

(11) **EP 1 435 452 A2**
(43) Veröffentlichungstag der Anmeldung: **07.07.2004**
(21) Anmeldenummer: 03026515.1
(22) Anmeldetag: 18.11.2003
(51) Int. Cl.: F02M 37/22

(54) **Kraftstofffiltergehäuse**

(30) Priorität: 30.12.2002 DE 10261744; 20.05.2003 DE 10322555
(71) Anmelder: ROBERT BOSCH GMBH, 70442 Stuttgart (DE)
(72) Erfinder: Sancho De Castro, Manuel, 37007 Salamanca (ES)

(57) **Zusammenfassung**

Die Erfindung betrifft einen Kraftstofffilter mit einem unteren Gehäuseteil (2) und einem oberen Gehäuseteil (1), wobei das untere Gehäuseteil (2) becherartig und das obere Gehäuseteil (1) als Deckel ausgebildet und beide Gehäuseteile (1,2) lösbar miteinander verbunden sind, mit mindestens einem insbesondere austauschbaren Filterelement (11) und mit verschiedenen Außenanschlüssen (18,19,24,26,27,31), von denen mindestens einer ein Kraftstoffeinlass und einer ein Kraftstoffauslass ist. Um eine kompakte Bauweise, die in der Herstellung möglichst einfach und möglichst wartungsfreundlich ist, zu ermöglichen, sind bei einem solchen Kraftstofffilter alle Außenanschlüsse am unteren Gehäuseteil angeordnet.

## Beschreibung

Die Erfindung betrifft einen Kraftstofffilter mit einem unteren Gehäuseteil und einem oberen Gehäuseteil, wobei das untere Gehäuseteil becherartig und das obere Gehäuseteil als Deckel ausgebildet und beide Gehäuseteile lösbar miteinander verbunden sind, mit mindestens einem insbesondere austauschbaren Filterelement und mit verschiedenen Außenanschlüssen, von denen mindestens einer ein Kraftstoffeinlass und einer ein Kraftstoffauslass ist.

Ein solcher Kraftstofffilter ist aus der DE 198 11 689 A1 bekannt. Das Gehäuse des Kraftstofffilters ist aus Vollkunststoff ausgeführt und weist ein becherförmiges Unterteil und ein deckelartiges Oberteil auf, das mittels Schnellverschluss lösbar auf dem becherförmigen Unterteil befestigt ist. Das becherartige untere Gehäuseteil nimmt einen zylindrischen Filtereinsatz auf, der auf einem Sockelabschnitt aufsitzt. Im Sockelabschnitt ist ein Sumpf für bei der Filtrierung des Kraftstoffs abgeschiedenes Wasser sowie ein über einen mit einer Verschlussschraube verschließbaren Wasserablass vorgesehen. Darüber hinaus ist am Sockelbereich ein Kraftstoffzulauf angeordnet, der in einen Zuströmkanal für eine unterhalb des Sockelabschnitts geschweißte Heizeinrichtung mündet. Auch ist im Sockelabschnitt ein Abströmkanal vorgesehen, durch den der Kraftstoff von der Heizeinrichtung auf die Schmutzseite des Filters gelangt. Der Filtereinsatz wird radial von außen nach innen durchströmt. Seine Reinseite steht in Verbindung mit einem Ablaufstutzen, über den der gereinigte Kraftstoff über einen ersten Kanal in Richtung zum Motor abgeführt werden kann. Darüber hinaus ist im Ablaufstutzen ein zweiter Kanal vorgesehen, der über ein Überströmventil verschließbar und über den eine Kraftstoffrückführung in den Tank möglich ist. Die Reinseite des Filters steht auch mit dem Sumpf in Verbindung.

Die Aufgabe der vorliegenden Erfindung liegt darin, einen Kraftstofffilter in kompakter Bauweise zu schaffen, der gegenüber dem vorbekannten einfacher herstellbar und wartbar ist.

Diese Aufgabe wird bei einem Kraftstofffilter der eingangs genannten Art dadurch gelöst, dass alle Außenanschlüsse am unteren Gehäuseteil angeordnet sind.

Daraus, dass das deckelartige Oberteil frei von jeglichen Außenanschlüssen ist, ergeben sich erhebliche Vorteile. So kann das Oberteil als einfaches Spritzgussteil gefertigt werden und muss nicht, wie sonst üblich, zusätzlich zum Unterteil des Gehäuses auch mit Anbauteilen bestückt werden. Somit durchläuft nur ein Bauteil, nämlich das Unterteil des Gehäuses, eine Montagelinie, in der verschiedene Anbauteile - einschließlich dem Gehäuseoberteil - an das Unterteil montiert werden. Ein ganz wesentlicher, weiterer Vorteil besteht darin, dass der Kraftstofffilter am Fahrzeug selbst gewartet werden kann. So muss nicht - wie bisher - der Kraftstofffilter erst aus dem Motor ausgebaut werden, um den Filtereinsatz auszutauschen. Es reicht vielmehr, einfach das deckelartige Oberteil abzunehmen, den Filtereinsatz herauszunehmen und einen neuen Filtereinsatz einzusetzen. Dies ist bei dem eingangs beschriebenen, vorbekannten Kraftstofffilter nicht so einfach möglich, da am deckelartigen Oberteil der Kraftstoffauslass vorgesehen ist.

In einer bevorzugten Ausführung der Erfindung besteht mindestens das untere Gehäuseteil aus einem Kunststoff und ist insbesondere ein Spritzgussteil. Der besondere Vorteil liegt darin, dass das Gehäuseunterteil direkt über verschiedene Anbauteile wie beispielsweise ein Temperatursensor, elektrische Anschlüsse für ein Heizelement oder ähnliches gegossen werden kann.

In einer weiteren bevorzugten Ausgestaltung der Erfindung sind eine Heizkammer mit einer Heizeinrichtung am Boden des unteren Gehäuseteils, in die der Kraftstoffeinlass mündet, sowie Mittel zum Leiten des durch die Heizkammer geführten Kraftstoffs auf die Schmutzseite des Filterelements vorgesehen. Durch die Integration der Heizeinrichtung in den Kraftstofffilter wird eine kompakte Anordnung aller für die Reinigung des Kraftstoffs benötigter Komponenten erreicht, die eine spätere Montage in einem Motorraum wesentlich erleichtert. Dabei ist es insbesondere von Vorteil, wenn die elektrischen Anschlüsse für die Heizeinrichtung in Höhe der Heizkammer seitlich aus dem unteren Gehäuseteil herausgeführt sind, da die Seite eines Kraftstofffilters in einem Motorraum in aller Regel leichter zugänglich ist als seine Unterseite.

Bevorzugt weist der Kraftstofffilter einen Temperatursensor am unteren Gehäuseteil auf, dessen Anschlüsse insbesondere seitlich aus dem unteren Gehäuseteil und vorzugsweise parallel zu den elektrischen Anschlüssen herausgeführt sind. Somit liegen alle für eine Temperaturregelung des Kraftstoffs notwendigen Anschlüsse zusammen, wodurch die Montage im Motorraum ebenso vereinfacht wird.

In einer weiteren bevorzugten Ausgestaltung sind ein Anschlussstutzen für den Kraftstoffeinlass und der bzw. die elektrischen Anschlüsse für die Heizeinrichtung in entgegengesetzter Richtung aus dem unteren Gehäuseteil herausgeführt, wobei der bzw. die elektrischen Anschlüsse und der Anschlussstutzen für den Kraftstoffeinlass in unterschiedlichen vertikalen Ebenen liegen. Bei einer solchen Anordnung wird der an der Außenfläche des Unterteils für die Anschlüsse bzw. Anschlussstutzen zur Verfügung stehende Platz optimal ausgenutzt.

Der Kraftstofffilter weist bevorzugt eine Wasserkammer zum Sammeln von bei der Filtrierung aus dem Kraftstoff abgeschiedenem Wasser sowie einen Wasserablass zum Abführen des in der Wasserkammer gesammelten Wassers aus dem unteren Gehäuseteil auf, damit er insbesondere als Filter für Dieselkraftstoffe verwendet werden kann. Der Wasserablass ist dann vorzugsweise in einer vertikalen Ebene senkrecht zur Ebene des Anschlussstutzens des Kraftstoffeinlasses angeordnet. Somit wird der Zugang zum Wasserablass bei einer Wartung des Kraftstofffilters nicht durch elektrische Kabel oder Kraftstoffleitungen beeinträchtigt.

Bevorzugt wird im erfindungsgemäßen Kraftstofffilter ein Sternfilterelement, das vom Kraftstoff radial von außen nach innen durchströmt wird, verwendet, wobei ein mindestens einen ersten Kanal aufweisender Rohrstutzen als Kraftstoffauslass vorgesehen ist, der sich vertikal entlang der zentralen Achse des Kraftstofffilters von einem unteren Bereich des vom Sternfilterelement eingeschlossenen Raums bis durch die Bodenwand des unteren Gehäuseteils erstreckt. Bei dieser Anordnung ist es des weiteren von Vorteil, wenn ein erstes horizontales Anschlussstück vorgesehen ist, das sich an das untere Ende des Rohrstutzens anschließt und mit dem ersten Kanal verbunden ist. Auch kann diese Anordnung vorzugsweise mit einem zweiten Kanal im Rohrstutzen als Rücklauf für überschüssigen Kraftstoff in den Tank ausgebildet sein, der am oberen Ende durch ein Überströmventil verschließbar ist. Dieser zweite Kanal ist vorzugsweise mit einem zweiten horizontales Anschlussstück verbunden, das sich an das Rohr anschließt. Dadurch, dass das Rohr durch die untere Bodenwand des Unterteils des Gehäuses herausgeführt wird, ist es möglich, die Anschlussstücke für die Kanäle in einer zu den übrigen Anschlüssen getrennten Ebene anzuordnen. Insbesondere hierdurch wird es möglich, auf Anschlüsse im Bereich des deckelartigen Gehäuseoberteils zu verzichten.

Das deckelartige obere Gehäuseteil ist bevorzugt mit einem Schraubschnellverschluss versehen, so dass es insbesondere bei einer Wartung des Kraftstofffilters mit möglichst geringem Aufwand vom unteren Gehäuseteil abgenommen werden kann.

Im folgenden wird die Erfindung anhand von Figuren, die ein bevorzugtes Ausführungsbeispiel zeigen, näher erläutert.

Es zeigen
- Figur 1: einen Querschnitt eines erfindungsgemäßen Ausführungsbeispiels entlang der Schnittkante F -F in Figur 2,
- Figur 2: eine Aufsicht auf das Ausführungsbeispiel aus Figur 1,
- Figur 3: einen Querschnitt des Ausführungsbeispiels entlang der Schnittkante G-G in Figur 2, und
- Figur 4: eine Ansicht des Ausführungsbeispiels von unten.

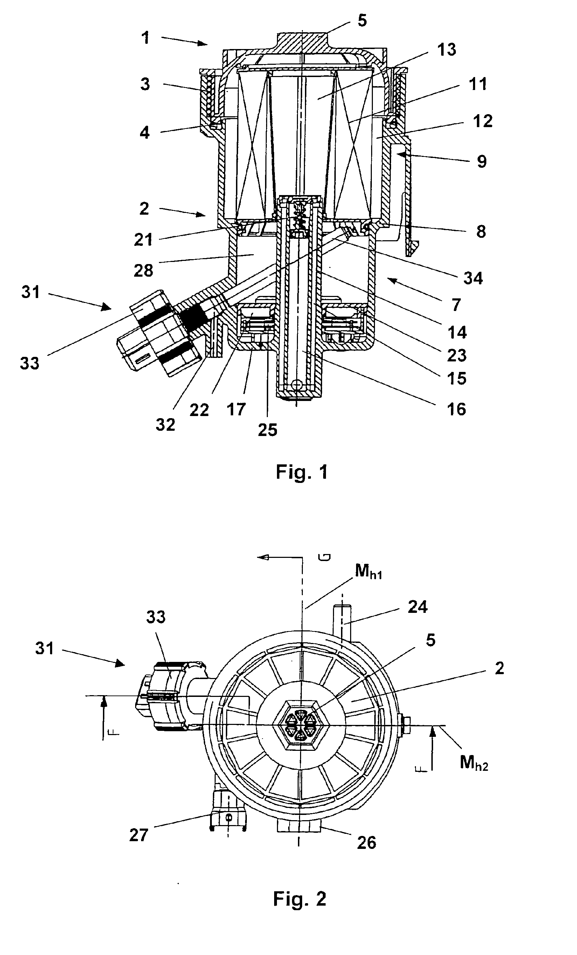

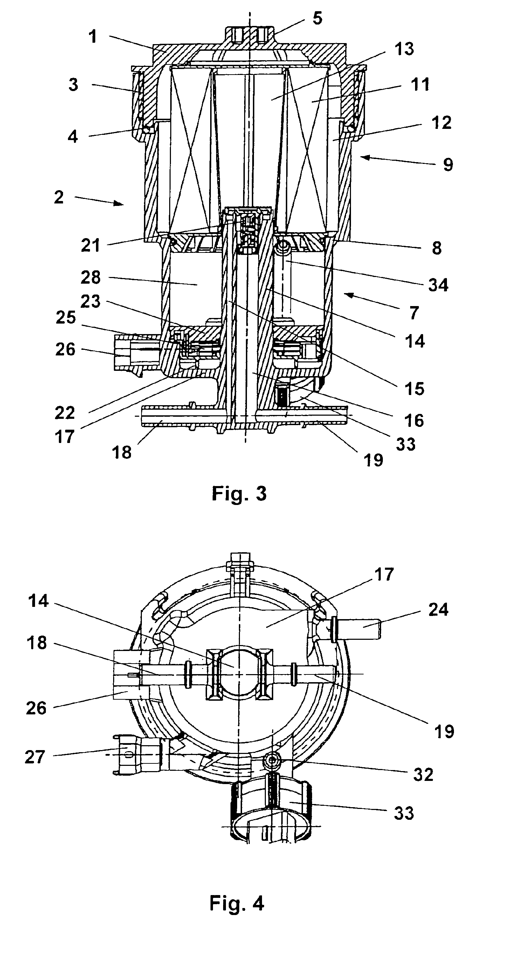

Der in den Figuren 1 bis 4 dargestellte Kraftstofffilter weist ein becherartiges unteres Gehäuseteil **2** auf, das mit einem deckelartig ausgebildeten oberen Gehäuseteil **1** verschlossen ist. Unterteil **2** und Oberteil **1** sind durch einen Schraubverschluss **3** lösbar miteinander verbunden, wobei das untere Gehäuseteil **2** das obere Gehäuseteil **1** übergreift. Der Schraubverschluss **3** wird durch eine umlaufende Dichtung **4** abgedichtet. An der Oberseite des oberen Gehäuseteils **1** ist eine nussartige Profilierung **5** vorgesehen, damit es mit einem Werkzeug vom unteren Gehäuseteil **1** abgeschraubt werden kann.

Der untere Gehäuseteil **2** ist im wesentlichen in zwei Abschnitte unterteilt, nämlich einen unteren, im wesentlichen hohlzylindrischen Sockelabschnitt **7**, der über eine ringförmige Schulter **8** in einen nach oben hin offenen Abschnitt **9** übergeht, dessen Innendurchmesser größer als der des Sockelabschnitts **7** ist. Im Abschnitt **9** ist ein Sternfiltereinsatz **11** angeordnet, der auf der Schulter **8** aufsitzt. Der Sternfiltereinsatz **11** wird radial von außen nach innen durchströmt, so dass der Raum außerhalb des Sternfiltereinsatzes **11** die Schmutzseite **12** und der Raum innerhalb des Sternfiltereinsatzes seine Reinseite **13** ist.

Ein vertikaler Rohrstutzen **14** mit zwei zueinander im wesentlichen konzentrischen Kanälen **15, 16** durchdringt entlang der vertikalen Mittelachse des Kraftstofffilters **M**_{**v**} die Bodenwand **17** des Sockelabschnitts **7** und reicht bis in den unteren, vom Sternfiltereinsatz **11** umschlossenen Bereich der Reinseite **13.** Der äußere, erste Kanal **15** ist an der Oberkante des Rohrstutzens **14** zur Reinseite **13** hin offen und mündet an der Unterkante des Rohrstutzens **14** in ein sich horizontal an den Rohrstutzen **14** anschließendes Anschlussstück **18,** das als Kraftstoffauslass dient und über das der gereinigte Kraftstoff beispielsweise einer Einspritzpumpe zugeführt werden kann. Der zweite, innere Kanal **16** ist am oberen Ende des Rohrstutzens **14** zur Reinseite **13** mit einem Überströmventil **21** verschlossen und mündet an der Unterseite des Rohrstutzens **14** in ein zweites horizontales Anschlussstück **19,** das sich in zum ersten Anschlussstück **18** entgegengesetzter Richtung öffnet. Über den zweiten Kanal **16** wird ein Ablaufen von Kraftstoff - beispielsweise zurück in den Tank - ermöglicht, wenn ein am Überströmventil **21** eingestellter Druck auf der Reinseite **13** des Sternfiltereinsatzes **11** überschritten wird.

Am Boden des Sockelabschnitts **7** ist außerhalb des Rohrstutzens **14** eine Heizkammer **22** vorgesehen, die durch einen Zwischendeckel **23** gegenüber dem darüber liegenden Teil des Sockelabschnitts 7 dicht abgetrennt ist. An der Heizkammer **22** ist seitlich und parallel zu einer horizontalen Mittelachse **M**_{**h1**} des Kraftstofffilters versetzt ein Kraftstoffeinlass vorgesehen, der über einen Anschlussstutzen **24** mit dem Tank verbunden ist. Innerhalb der Heizkammer **22** sind PTC-Heizelemente **25** zum Aufheizen des die Heizkammer **22** durchströmenden Kraftstoffs angeordnet. Die Heizkammer **22** ist über eine nicht dargestellte, seitlich an der Gehäusewand des Kraftstofffilters geführte Leitung mit der Schmutzseite **12** des Sternfiltereinsatzes **11** verbunden. Auf der dem Kraftstoffeinlass gegenüberliegenden Seite des Kraftstofffilters ist im Bereich der Mittelachse **M**_{**h1**} ein elektrischer Außenanschluss **26** für die PTC-Heizelemente **25** vorgesehen. Die elektrischen Leitungen zur Versorgung der PTC-Heizelemente **25** sind durch die Gehäusewand hindurch geführt. Horizontal und seitlich parallel zum elektrischen Außenanschluss **26** ist ein Temperatursensor **27** in das untere Gehäuseteil **2** eingelassen, dessen Signalanschluss von außen zugänglich ist.

Der Bereich des Sockelabschnitts **7** oberhalb der Heizkammer **22** dient als Wasserkammer **28** für am Sternfiltereinsatz **11** auf dessen Reinseite **13** abgeschiedenes Wasser. Direkt oberhalb des Zwischendeckels **23** ist in der Seitenwand des Sockelabschnitts **7** ein nach außen schräg abwärts gerichteter Wasserablass **31** vorgesehen, der in einen senkrecht nach unten verlaufenden Wasserkanal **32** mündet. Der Wasserablass **31** ist gleichzeitig rechtwinklig zur horizontalen Mittelachse **M**_{**h1**} und zur horizontalen Mittelachse **M**_{**h2**} parallel in Richtung zur Seite des Kraftstoffeinlass versetzt ausgerichtet. Der Wasserablass **31** wird durch eine manuell betätigbare Ablaufschraube **33** verschlossen. das in den schräg verlaufenden Wasserablass **31** hineinragt und in Schließposition den Wasserkanal **32** verschließt. Die Ablaufschraube **33** trägt einen Wassersensor **34,** der schräg aufwärts gerichtet in die Wasserkammer **28** hineinragt und dessen Spitze bis zur Oberkante der Wasserkammer **28** reicht.

Die Funktionsweise des Kraftstofffilters ist wie folgt.

Der Kraftstoff wird über den Kraftstoffeinlass der Heizkammer **22** zugeführt. Beim Durchströmen der Heizkammer wird der Kraftstoff erwärmt. Von der Heizkammer **22** strömt der Kraftstoff über einen Kanal auf die Schmutzseite **12** des Sternfiltereinsatzes **11** im oberen Abschnitt **9** des unteren Gehäuseteils **2**. Der Kraftstoff durchströmt den Sternfiltereinsatz **11** radial nach innen. Dabei wird der Kraftstoff nicht nur gereinigt, gleichzeitig wird auf der Reinseite **13** des Filters **11** Wasser abgeschieden. Das Wasser sammelt sich aufgrund seiner gegenüber dem Kraftstoff höheren spezifischen Dichte unterhalb des Sternfiltereinsatzes **11** in der Wasserkammer **28.**

Der gereinigte Kraftstoff wird über den ersten Kanal **25** dem Motor zugeführt. Ab einem bestimmten Druck auf der Reinseite **13** öffnet das Überströmventil **21**. Hierdurch kann überschüssiger Kraftstoff beispielsweise zurück in den Tank abgeführt werden.

Sobald der Wasserpegel in der Wasserkammer **28** die Spitze des Wassersensors **33** erreicht hat, gibt der Wassersensor **34** ein Signal ab, beispielsweise ein Signal im Armaturenbrett eines Fahrzeugs, ein akustisches Signal oder ähnliches, um anzuzeigen, dass der Kraftstofffilter gewartet bzw. die Wasserkammer entleert werden muss.

## Patentansprüche

1. Kraftstofffilter mit einem unteren Gehäuseteil (2) und einem oberen Gehäuseteil (1), wobei das untere Gehäuseteil (2) becherartig und das obere Gehäuseteil (1) als Deckel ausgebildet und beide Gehäuseteile (1,2) lösbar miteinander verbunden sind, mit mindestens einem insbesondere austauschbaren Filterelement (11) und mit verschiedenen Außenanschlüssen (18,19,24,26,27,31), von denen mindestens einer ein Kraftstoffeinlass und einer ein Kraftstoffauslass ist, **dadurch gekennzeichnet, dass** alle Außenanschlüsse (18,19,24,26,27,31) am unteren Gehäuseteil (2) angeordnet sind.

2. Kraftstofffilter nach Anspruch 1, **dadurch gekennzeichnet, dass** mindestens das untere Gehäuseteil (2) aus einem Kunststoff besteht und insbesondere ein Spritzgussteil ist.

3. Kraftstofffilter nach Anspruch 1 oder 2, **gekennzeichnet durch** eine Heizkammer (22) mit einer Heizeinrichtung am Boden des unteren Gehäuseteils (2), in die der Kraftstoffeinlass mündet, und **durch** Mittel zum Leiten des **durch** die Heizkammer (22) geführten Kraftstoffs auf die Schmutzseite (12) des Filterelements (11).

4. Kraftstofffilter nach Anspruch 3, **dadurch gekennzeichnet, dass** mindestens ein elektrischer Anschluss (26) für die Heizeinrichtung in Höhe der Heizkammer (22) seitlich aus dem unteren Gehäuseteil (2) herausgeführt sind.

5. Kraftstofffilter nach einem der Ansprüche 1 bis 4, **gekennzeichnet durch** einen Temperatursensor (27) am unteren Gehäuseteil (2), dessen Anschlüsse insbesondere seitlich aus dem unteren Gehäuseteil (2) und vorzugsweise parallel zu dem bzw. den elektrischen Anschlüssen (26) herausgeführt sind.

6. Kraftstofffilter nach Anspruch 4 oder 5, **gekennzeichnet durch** einen Anschlussstutzen (24) für den Kraftstoffeinlass, wobei der Anschlussstutzen (24) und der bzw. die elektrischen Anschlüsse (26) in entgegengesetzte Richtungen aus dem unteren Gehäuseteil (2) herausgeführt sind und in unterschiedlichen vertikalen Ebenen liegen.

7. Kraftstofffilter nach einem der Ansprüche 1 bis 6, **gekennzeichnet durch** eine Wasserkammer (28) zum Sammeln von bei der Filterung aus dem Kraftstoff abgeschiedenem Wasser, und einen Wasserablass (31) zum Abführen des in der Wasserkammer (28) gesammelten Wassers aus dem unteren Gehäuseteil (2).

8. Kraftstofffilter nach Anspruch 7, **dadurch gekennzeichnet, dass** der Wasserablass (31) in einer vertikalen Ebene senkrecht zur Ebene des Anschlussstutzens (24) des Kraftstoffeinlasses angeordnet ist.

9. Kraftstofffilter nach einem der Ansprüche 1 bis 8, **gekennzeichnet durch** ein Sternfilterelement (11), das vom Kraftstoff radial von außen nach innen durchströmt wird, und **durch** einen mindestens einen ersten Kanal (15) aufweisenden Rohrstutzen (14) als Kraftstoffauslass, der sich vertikal entlang der zentralen Achse des Kraftstofffilters von einem unteren Bereich des vom Sternfilterelement (11) eingeschlossenen Raums bis **durch** die Bodenwand (17) des unteren Gehäuseteils (2) erstreckt.

10. Kraftstofffilter nach Anspruch 9, **gekennzeichnet durch** ein erstes horizontales Anschlussstück, das sich an das Rohr (14) anschließt und mit dem ersten Kanal (15) verbunden ist.

11. Kraftstofffilter nach Anspruch 9 oder 10, **gekennzeichnet durch** einen zweiten Kanal (16) im Rohrstutzen, der am oberen Ende **durch** ein Überströmventil (21) verschließbar ist, als Ablauf für überschüssigen Kraftstoff.

12. Kraftstofffilter nach Anspruch 11, **gekennzeichnet durch** ein zweites horizontales Anschlussstück (19), das sich an den Rohrstutzen (14) anschließt und mit dem zweiten Kanal (16) verbunden ist.

13. Kraftstofffilter nach einem der Ansprüche 1 bis 12, **dadurch gekennzeichnet, dass** das deckelartige obere Gehäuseteil (1) über einen Schraubschnellverschluss mit dem unteren Gehäuseteil (2) lösbar verbunden ist.
